# EUROPEAN PATENT APPLICATION

(11) **EP 2 533 250 A1**
(43) Date of publication of application: **12.12.2012**
(21) Application number: 11275093.0
(22) Date of filing: 08.06.2011
(51) Int. Cl.: G21H 1/00, C01B 3/06

(54) **Electricity generation**

(71) Applicant: BAE Systems Plc, London SW1Y 5AD (GB)
(72) Inventor: The designation of the inventor has not yet been filed
(74) Representative: BAE SYSTEMS plc Group IP Department

(57) **Abstract**

Electricity generation apparatus is disclosed. The apparatus comprises a plasma container (120) for containing a plasma (115) sustained by radioactive decay. The plasma container has an inlet (150) through which, in use of the apparatus, water can be introduced to the plasma container (120), and an outlet (140) through which, in use of the apparatus, material can be expelled from the container. The exhausted material comprises hydrogen and oxygen resulting from the dissociation of water molecules caused by interactions within the plasma. The apparatus further comprises a separator (160) for separating hydrogen from the material exhausted from the plasma container, which separator is coupled to the outlet, and a generator operable to generate electricity using the hydrogen as a fuel.

## Description

The present invention relates to apparatus and methods for electricity generation, and more particularly to apparatuses and methods based on the conversion of energy released through radioactive decay into useable electric power, either directly or via an energy storage process.

The conversion of energy released through radioactive decay into electrical energy is known, for example, from the paper 'Diamond Photovoltaics in Energy Conversion', by M. A. Prelas et al., published in the proceedings of the 2nd International Conference on the Applications of Diamond Films and Related Materials, edited by M. Yoshikawa, M. Murakawa, Y. Tzeng and W. A. Yarbrough, 1993, page 329. Prelas et al. disclose a means for generating power using the radioisotope krypton-85. Krypton-85 decays via the emission of beta particles, which can in turn ionise other krypton-85 atoms, or excite the electrons in other krypton-85 atoms. The process of beta emission can therefore be used to sustain a plasma in a contained volume of krypton-85. Recombination of electrons with ions in the plasma, or relaxation of excited atoms, results in the emission of photons. Prelas et al. suggest the capture of these photons at photovoltaic cells surrounding the plasma container, in order to generate electric power.

A problem with the means for generating electrical power disclosed by Prelas et al. is the relative inefficiency of photovoltaic devices, particularly at the high temperatures generated in the plasma. Prelas et al. suggest the use of wide-bandgap semiconductors in order to improve the efficiency of such a device, but the overall efficiency of electrical power generation is still limited to around 40%.

It is therefore desirable to increase the efficiency of electrical power generation based on radioactive decay. It is further desirable to provide alternate means of electrical power generation based on radioactive decay.

In accordance with a first aspect of the invention, there is provided electricity generation apparatus comprising a plasma container for containing a plasma sustained by radioactive decay; the plasma container having an inlet through which, in use of the apparatus, water can be introduced to the plasma container, and an outlet through which, in use of the apparatus, material comprising hydrogen and oxygen resulting from the dissociation of water molecules can be exhausted from the container; the apparatus further comprising a separator for separating hydrogen from the material exhausted from the plasma container, the separator being coupled to the outlet, and a generator operable to generate electricity using the hydrogen as a fuel.

The plasma container may contain a radioactive gas, which radioactive gas may decay by beta decay. In one particular embodiment, the radioactive gas comprises krypton-85.

The generator may comprise a fuel cell.

The pressure in the plasma container may be in the range between 1 Torr and 600 Torr, or may be in the range between 10 Torr and 100 Torr. in one particular embodiment described in further detail below, the pressure in the plasma container is approximately 20 Torr.

The apparatus may further comprise a mixture management system operable to control the pressure in the plasma container, and to control the relative amounts of water vapour and radioactive gas in the plasma container. The apparatus may further comprise a hydrogen storage device to store hydrogen expelled from the plasma container and operable to deliver hydrogen to the generator at a rate dependent on electric power demand.

The separator may comprise a selective transport membrane, and more particularly may comprise a hydrogen selective membrane. The separator may, in one embodiment, comprise both a hydrogen selective membrane and an oxygen selective membrane.

In accordance with a second aspect of the invention, there is provided apparatus for the generation of electrical power comprising: means to dissociate water molecules to form hydrogen and oxygen; means to separate and store hydrogen; and means to generate electricity using the stored hydrogen as a fuel; the means to dissociate water comprising a plasma sustained by radioactive decay.

In accordance with a third aspect of the invention, there is provided a method of generating electric power, comprising passing water through a plasma, the plasma being arranged such that water molecules are dissociated into hydrogen and oxygen; separating the hydrogen, supplying the hydrogen to a fuel cell, and operating the fuel cell to generate electric power.

The above and further features of the invention are set forth with particularity in the appended claims and will be described hereinafter with reference to the accompanying drawing in which:

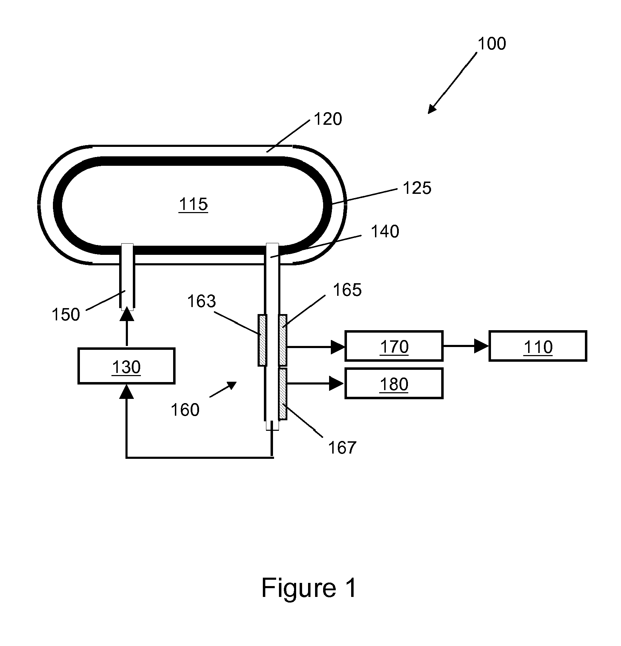

Figure 1 is a schematic diagram of apparatus in accordance with a first embodiment of the invention.

Figure 1 is a schematic diagram of apparatus 100 for the generation of electrical power in accordance with a first embodiment of the invention. In broad terms, electrical power is generated by a fuel cell 110 that runs on hydrogen fuel generated within the apparatus 100 by the dissociation of water. Water dissociation is achieved by the injection of pure water into a plasma 115 which is sustained by radioactive decay. Interactions between radicals in the plasma and water molecules cause dissociation of the water. Selection of a radioisotope having a suitably long half life enables electrical power to be generated over a long period of time with the only necessary fuel input being water.

In the present embodiment, the plasma is sustained by beta decay of the radio isotope krypton-85, which has a half life of approximately 10.5 years and decays by beta emission to the stable rubidium-85. Decay of ⁸⁵Kr occurs predominantly (99.5%) by beta emission at 687 keV, there being also a minor decay channel (0.5%) in which beta emission at 173 keV is accompanied by gamma emission at 514 keV. These energetic particles may collide inelastically with other ⁸⁵Kr atoms, resulting in ionisation and the generation of further energetic electrons, which may themselves have sufficient energy to cause further ionisation. These processes lead to the formation of a plasma.

A number of interactions between the various species within the plasma are possible, including ionisation as described above; excitation of krypton atoms by collision with electrons in the plasma, with subsequent relaxation accompanied by photon emission; Pen ionisation, in which a krypton atom in an excited state collides with an unexcited krypton atom, resulting in ionisation of one of the krypton atoms; recombination of electrons with krypton ions resulting in the formation of a krypton atom and photon emission; electronegative capture resulting in the formation of negatively charged krypton ions; and ion-ion recombination, involving the collision of a oppositely charged krypton ions resulting in two krypton atoms and accompanying photon emission.

These processes result in the plasma exhibiting a high photon density, and in the presence of a high-temperature electron population. Water added to this plasma may be dissociated either by collision with an electron, or by interaction with a photon of suitably high energy, creating both hydrogen and oxygen. Hydrogen can be separated for subsequent use as a fuel to generate electrical power as described below.

A summary of the processes taking place in the plasma is presented in table 1 below.

| TABLE 1: Summary of interactions in ⁸⁵Kr beta-emission sustained plasma | | |
|---|---|---|
| Ionisation | e + Kr → Kr⁺ + 2e | B⁻ + Kr⁺→ Kr + nhv |
| Excitation | e + Kr → Kr* + e | Relaxation Kr* → Krg + hv |
| Pen ionisation | Kr* + Kr → Kr⁺ + Kr + e | via meta stable formation |
| Recombination | E + Kr⁺ → Kr + e + hv | via third body |
| Electron attachment | E + Kr → Kr⁻ | Electronegative capture |
| Ion-ion recombination | Kr⁺ + Kr- → 2Kr + nhv | via third body |
| Beta recombination | B⁻ + Kr⁺→ Kr + nhv | high photon and some gamma |
| Stable ⁸⁵Rb formation | ⁸⁵Kr⁴⁹₃₆ → + ⁸⁵Rb⁴⁸₃₇ + B⁻ | B- 99.5% at 687 KeV |
| Water dissociation | e⁻ + H₂O → 2H + O | OH⁻ radicals formed in |
| (electron impact) | | intermediary steps |
| Water dissociation (UV) | Hv + H₂O → 2H + O | OH⁻ radicals formed in intermediary steps |

The plasma is contained within a plasma container, which in the present embodiment comprises a stainless steel pressure vessel 120. 316L stainless steel is used to fabricate the plasma container as it has a relatively low carbon content. It is preferable to select a low carbon content stainless steel since carbon can be attacked by radical species within the plasma, particularly those species generated by the dissociation of water molecules. The plasma container is similar to that disclosed by Prelas in the above-referenced publication, except in that it is coupled to a mixture management system 130, and in that an outlet 140 is provided to allow evolved gases to be expelled from the system such that hydrogen can be separated for use as fuel as described below. The mixture management system controls the pressure within the vessel 120, and introduces water vapour into the vessel 120 via inlet 150. The control provided by the mixture management system 130 maintains the conditions in the plasma container appropriately for the plasma to be sustained, in particular maintaining the pressure within the container, but also maintaining a sufficient ratio of ⁸⁵Kr to water vapour (through varying the rate of introduction of water vapour) to provide a suitable ionisation rate.

The pressure within the container is kept relatively low, for example at approximately 20 Torr. Recombination rates, both for krypton ions within the plasma and for the products of water molecule dissociation, increase as the pressure rises. It is preferred to keep the recombination rate low in order for dissociation of water molecules to be achieved more efficiently. This low pressure contrasts with the much higher pressures used for prior known power generators based on krypton-85, in which power generation is achieved primarily using photovoltaic materials surrounding the interior of the container to convert photonic radiation in to electrical power. Higher pressures lead to higher levels of photonic radiation.

Similar to the disclosure of Prelas, the interior of the container is surrounded by wide bandgap photovoltaic material 125, such as aluminium nitride, silicon carbide, gallium nitride or diamond, to act as a secondary means of electric power generation deriving energy from photonic radiation generated within the plasma by the processes outlined above. It may further be surrounded by a lead radiation shield, although in the present embodiment the entire apparatus is surrounded by a radiation shield in order to mitigate the effects of contamination of the gases expelled from the plasma container with radioactive material. The interior surface of the container is polished to suppress recombination rates.

The plasma container outlet 140 is coupled to a separator indicated generally by reference numeral 160. Separator 160 separates the exhaust gases that pass through outlet 140. These exhaust gases will include oxygen, hydrogen, water, krypton and rubidium compounds (including rubidium oxide) resulting from the radioactive decay of krypton-85. In the present embodiment, separator 160 comprises a number of different stages each adapted to separate out a particular component of the exhaust gases. A cold finger, indicated schematically at 163, can be used to condense rubidium compounds formed by the radioactive decay of ⁸⁵Kr from the exhaust gases. Subsequently, hydrogen and oxygen are removed from the exhaust gases using suitable membrane technology, and the remaining exhaust gases can be re-circulated into the plasma container via the management system 130.

A hydrogen selective membrane 165 is used to separate out hydrogen from the exhaust gases. Hydrogen separation membranes selectively pass hydrogen from a region in which there is a relatively high partial hydrogen pressure to a region in which there is a relatively low partial hydrogen pressure. Hydrogen selectivity occurs as a result of the small size of the hydrogen molecules, or can result from the catalytic dissociation of hydrogen on a membrane surface followed by proton transport through the membrane, and subsequent recombination to hydrogen molecules. Several of materials can be used including dense metals, nano-porous inorganic materials such as ceramics, oxides or glasses, organic polymers, dense ion transport membranes based on proton conducting materials, or composites of such materials. J. W. Phair and S. P. S. Badwal review these technologies in their paper 'Materials for separation membranes in hydrogen and oxygen production and future power generation', published in Science and Technology of Advanced Materials, Volume 7 (2006) at pages 792 - 805, the content of which is hereby incorporated by reference. In the present embodiment, it is preferred to use membranes that do not require significant heating or other power in order to transport hydrogen, so that the efficiency of power generation is not compromised by parasitic power demands arising from gas separation. In the present embodiment, hydrogen selective membrane 165 is based on sulfonated polyether ketone, which functions at temperatures below 80 °C, is used, although it should be appreciated that many other materials may also provide suitable separation.

Oxygen separation is performed by oxygen ion transport membrane 167, which selectively transports oxygen through a mechanism similar to that described above with reference to hydrogen separation membrane 165. It is preferable to select a membrane composition that does not require significant heating or other power in order to achieve oxygen transport, as in the case of the hydrogen separation membrane, in order to reduce parasitic power demands on the power conversion apparatus and thereby enhance efficiency. Oxygen ion transport membrane technology is also reviewed in the above-referenced paper by Phair et al.. In the present embodiment, membrane 167 comprises a dual phase mixture of doped zirconia (conductive to oxygen ions) and silver metal (to conduct electrons), although it will be appreciated that other membrane technologies can be used. Oxygen passing through the membrane is dumped to dump 180. In the present embodiment, dump 180 leads directly to the external environment, but those skilled in the art will appreciate that either direct to the external environment, or into a suitable store. Those skilled in the art will appreciate that heat for the oxygen ion transport membrane can be provided from heat generated by the interactions within the plasma container by ensuring suitable thermal coupling between the ion transport membrane and the plasma container.

The output from the hydrogen selective membrane 165 is coupled to a safe delivery system 170 and then subsequently to fuel cell 110 which generates electricity using the hydrogen as fuel. Safe delivery systems are commercially available, for example from PraxAir. The safe delivery system 170 is arranged to ensure a low partial pressure of hydrogen on the storage side of hydrogen selective membrane 165 in order to enhance the efficiency of transport across the membrane, and to deliver hydrogen to a fuel cell that generates electricity from electrochemical reactions between the hydrogen and oxygen supplied, for example from the air, to the fuel cell. Fuel cells are also commercially available, for example from Rolls-Royce. Currently available fuel cells function at efficiencies of order 65% in the conversion of the chemical potential energy of hydrogen into electrical power. It will be appreciated that in alternative embodiments, oxygen for the fuel cell could be provided from oxygen selective membrane 167.

It is expected that apparatus 100 described in the above will be operable to generate hydrogen at a rate of several litres per minute, suitable to deliver continuous power in a range between 100 W and 400 W. However, it is envisaged that, through appropriate use of hydrogen storage and delivery, significantly higher peak powers can be delivered by the apparatus. Moreover, krypton-85, having a half-life in excess of ten years, is able to sustain water dissociation over long periods of time, and the power generation apparatus will function over a period of multiples of the half life.

Whilst one specific embodiment of the invention has been described in the above, it is to be noted that variations and modifications are possible without departing from the scope of the present invention which is defined in the accompanying claims. For example, it may be possible to add other radioactive species to the plasma in order to alter the interactions that take place within the plasma. For example, radioisotopes decaying by positron emission could be added. Positrons present in the plasma would annihilate with electrons, resulting in the emission of highly energetic gamma rays. Such highly exothermic interactions increase the temperature in the plasma container, which can be beneficial, for example for reducing recombination rates, or for use as an additional power source in combination with suitable thermionics. An example of such an additional species is iodine-124, which can be added in the form of hydrogen iodide. Iodine-124 decays by positron emission with a half life of four days.

Furthermore, whilst in the above-described embodiment, oxygen evolved from the dissociation of water molecules is simply dumped, it will be possible to use the oxygen, for example in the fuel cell in the event that the power conversion apparatus is to be used in an environment where oxygen supply is limited. Moreover, it may also be possible to use a suitable getter material in order to remove oxygen from the gas mixture flowing through the plasma container, in contrast to the ion transport membrane described in the above.

Other forms of power generation may also be included in the apparatus in order to enhance the overall efficiency of the apparatus, in addition to hydrogen generation and wide bandgap photovoltaic cells. As mentioned above, it may be appropriate to add thermal electrical generation means, particularly if the plasma contains a population of positron emitting radioisotopes. The efficiency of electrical power generation by thermal means can be enhanced by biasing the electron population towards a particular area of the plasma container through the application of a magnetic field, and locating thermionics at that region. The high electron temperature present in the plasma generator can then be harnessed to maximum benefit. For example, it may be desirable to bias the electron population towards the inner surface of the plasma container.

It will also be noted that the pressure within the plasma container can be varied from the 20 Torr described in relation to the above-described embodiment. For example, the pressure can be raised if it is preferred to raise the photon density within the plasma container, thereby increasing the level of electrical energy generated by the photovoltaic cells, but potentially reducing the amount hydrogen generation. It is thought that an appropriate balance between the various energy generation mechanisms can be achieved with a pressure in the range between 1 Torr and 600 Torr, although more preferably the pressure is maintained in the range between 10 Torr and 100 Torr.

Finally, it is noted that it is to be clearly understood that any feature described above in relation to any one embodiment may be used alone, or in combination with other features described, and may also be used in combination with one or more features of any other of the embodiments, or any combination of any other of the embodiments.

## Claims

1. Electricity generation apparatus comprising a plasma container for containing a plasma sustained by radioactive decay; the plasma container having an inlet through which, in use of the apparatus, water can be introduced to the plasma container, and an outlet through which, in use of the apparatus, material comprising hydrogen and oxygen resulting from the dissociation of water molecules can be exhausted from the container; the apparatus further comprising a separator for separating hydrogen from the material exhausted from the plasma container, the separator being coupled to the outlet, and a generator operable to generate electricity using the hydrogen as a fuel.

2. Apparatus as claimed in claim 1, wherein the plasma container contains a radioactive gas.

3. Apparatus as claimed in claim 2, wherein the radioactive gas decays by beta decay.

4. Apparatus as claimed in claim 2 or claim 3, wherein the radioactive gas comprises krypton-85.

5. Apparatus as claimed in any one of the preceding claims, wherein the generator comprises a fuel cell.

6. Apparatus as claimed in any one of the preceding claims, wherein the pressure in the plasma container is in the range between 1 Torr and 600 Torr.

7. Apparatus as claimed in claim 6, wherein the pressure in the plasma container is in the range between 10 Torr and 100 Torr.

8. Apparatus as claimed in claim 7, wherein the pressure in the plasma container is approximately 20 Torr.

9. Apparatus as claimed in any one of claims 2 to 9, further comprising a mixture management system operable to control the pressure in the plasma container, and to control the relative amounts of water vapour and radioactive gas in the plasma container.

10. Apparatus as claimed in any preceding claim, further comprising a hydrogen storage device to store hydrogen expelled from the plasma container and operable to deliver hydrogen to the generator at a rate dependent on electric power demand.

11. Apparatus as claimed in any one of the preceding claims, wherein the separator comprises a selective transport membrane.

12. Apparatus as claimed in claim 11, wherein the selective transport membrane comprises a hydrogen selective membrane.

13. Apparatus as claimed in any one of claims 1 to 10, wherein the separator comprises a hydrogen selective membrane and an oxygen selective membrane.

14. Apparatus for the generation of electrical power comprising: means to dissociate water molecules to form hydrogen and oxygen; means to separate and store hydrogen; and means to generate electricity using the stored hydrogen as a fuel; the means to dissociate water comprising a plasma sustained by radioactive decay.

15. A method of generating electric power, comprising passing water through a plasma, the plasma being arranged such that water molecules are dissociated into hydrogen and oxygen; separating the hydrogen, supplying the hydrogen to a fuel cell, and operating the fuel cell to generate electric power.
